# EUROPEAN PATENT APPLICATION

(11) **EP 4 782 205 A1**
(43) Date of publication of application: **29.07.2026**
(21) Application number: 25184469.2
(22) Date of filing: 23.06.2025
(51) Int. Cl.: B32B 27/08, B32B 27/30, B32B 27/36, C08J 5/18

(54) **BIO-BASED LAMINATED FILM AND PREPARATION METHOD THEREOF**

(30) Priority: 22.01.2025 CN 202510099993
(71) Applicant: Changdi New Material Technology (Shanghai) Co., Ltd., Shanghai 200949 (CN)
(72) Inventor: TANG, Wencheng, Shanghai, 200949 (CN); CHEN, Mingyang, Shanghai, 200949 (CN); MAO, Yaoquan, Shanghai, 200949 (CN)
(74) Representative: Murgitroyd & Company

(57) **Abstract**

The present application relates to the technical field of optical films, and particularly discloses a bio-based laminated film and a preparation method thereof. The laminated film is obtained by alternately laminating two resins with different refractive indices, one of which is a bio-based polyester resin, the difference in refractive index between the two resins is larger than or equal to 0.05, and the laminated film reflects light with a wavelength ranging from 300 nm to 1200 nm; the bio-based polyester resin is polyethylene 2,5-furandicarboxylate or polyhydroxyalkanoate; the laminated film is biodegradable in property and achieves the improvements on the mechanical property and the optical property.

## Description

### BACKGROUND

### Technical Field

The present application relates to the technical field of optical films, and more particularly to a bio-based laminated film and a preparation method thereof.

### Description of Related Art

Laminated film technology is achieved by alternately laminating two or more materials with different optical properties. By designing the optical thickness of the film layer, the reflection of sunlight rays passing through multiple interfaces in the laminated film can appear in different wavelength ranges. On this basis, through the matching of different materials and the structural design of film layers, more and more films with different optical properties are gradually being developed and applied, such as infrared reflective film, polarizing reflective film, etc.

At present, the resins used in laminated films are generally petrochemical products and are not biodegradable. As the use of laminated films increases, resin recycling becomes difficult, which easily pollutes the environment and is not conducive to sustainable development.

### SUMMARY

To solve the problem that traditional laminated films are derived from petrochemical raw materials and are not environmentally friendly, the present application provides a bio-based laminated film and a preparation method thereof. The laminated film is biodegradable in property and has low haze and excellent mechanical properties.

In a first aspect, the present application provides a bio-based laminated film, which adopts the following technical solutions:

A bio-based laminated film, obtained by alternately laminating two resins with different refractive indices, one of which is a bio-based polyester resin, the difference in refractive index between the two resins is larger than or equal to 0.05, and the laminated film reflects light with a wavelength ranging from 300 nm to 1200 nm;

The bio-based polyester resin is polyethylene 2,5-furandicarboxylate or polyhydroxyalkanoate.

Furthermore, one resin in the laminated film is polyethylene 2,5-furandicarboxylate, and the other resin is selected from the group consisting of polymethyl methacrylate (PMMA), polyethylene naphthalate, polyethylene terephthalate-1,4-cyclohexane dimethanol or polyhydroxyalkanoate.

Furthermore, the number of alternating layers of the bio-based laminated film is 231 to 401.

Furthermore, the intrinsic viscosities of the resins are 0.8-1.0 dL/g.

Furthermore, the optical thickness of a single layer of the resin is 20 to 200 nm.

Furthermore, in the reflectance spectrum curve of the bio-based laminated film in the wavelength range of 300 to 1200 nm, the difference between the maximum reflectance and the minimum reflectance is greater than 50%.

In a second aspect, the present application provides a method for preparing a bio-based laminated film, using the following technical solutions:
A method for preparing a bio-based laminated film, including the steps of:
pretreatment: vacuum drying and pre-crystallizing two types of resin particles;
co-extrusion film forming: melting the pre-crystallized resin particles separately, introducing the molten resins into a distributor, and co-extruding the molten resins at a temperature ranging from 255°C to 265°C to obtain a cast sheet;
stretching and setting: stretching the cast sheet at a stretching temperature of 95 to 105°C, setting the stretched sheet in a heating box maintained at 105°C to 115°C to obtain a bio-based laminated film.

Furthermore, in the pretreatment step, the pre-crystallization temperature is 120-140°C, the pre-crystallization vacuum degree is 0.1-1 Torr, and the pre-crystallization time is 10-24h.

Furthermore, in the stretching and setting step, the stretching ratio is 3 to 5 times, and the stretching speed is 30 to 50 mm/s.

Furthermore, in the stretching and setting step, the blowing speed of the heating box is 60 to 80 mm/s.

Furthermore, in the stretching and setting step, the holding time of the heating box is 70 to 90s.

The present application provides at least the following advantages:

First, the present application specifically selects a bio-based polyester resin as one of the main raw materials for the laminated film. Polyethylene 2,5-furandicarboxylate (PEF) can be degraded into dicarboxylic acid and furan glycol under the action of microorganisms. Polyhydroxyalkanoate (PHA) is a bio-based material. The two resins, as one of the primary raw materials of the laminated film, give the laminated film biodegradable properties, which is beneficial to the later recycling of the bio-based laminated film.

Secondly, the traditional multilayer polyethylene 2,5-furandicarboxylate has poor light transmittance. By adopting this lamination technology and casting and stretching at an appropriate temperature, interference occurs between the reflected light at the interface between the two resins of the laminated film and the reflected light at the interface between the laminated film and the air, thereby improving the light transmittance of the laminated film, thereby solving the problem of poor light transmittance of polyethylene 2,5-furandicarboxylate.

Furthermore, the refractive index of PEF among bio-based polyester resins is quite different from that of PMMA, PEN, PETG and PHA, which meets the needs of optical application scenarios. The intrinsic viscosities of the above-mentioned resins are similar, and the flow speeds of the resins in the distributor are similar. The resin with a large intrinsic viscosity is not easy to stretch the resin with a small intrinsic viscosity, and the interface between the two resins is not easy to undergo irregular distortion. The transmittance of the laminated film is increased, which is beneficial to improving the optical properties of the laminated film.

The above resins all contain ester groups, have good compatibility, and have moderate bonding forces between layers. When the resins are melt-laminated, the thermal stress and mechanical stress at the interface between the two are good, and the laminated film has good mechanical properties. At the same time, due to the structural property of the resin itself, when the resins are melt-laminated, the surface tension at the interface between the two is different, and mutual diffusion is not easy to occur.

Finally, improvements are made to the preparation method of the laminated film. The resin particles are first pre-crystallized to make the molecular arrangement of the resin particles more orderly, thereby improving the strength, stiffness, heat resistance, weather resistance, chemical corrosion resistance and other properties of the laminated film; the temperature during extrusion is controlled. When the extrusion temperature is within this range, the pellets are completely crystallized, the probability of bubbles forming between the laminated films is reduced, and the light transmittance of the laminated film is improved, which helps to improve the optical and mechanical properties of the laminated film; the stretching temperature and the temperature of the heating box are controlled so that the macromolecular chains of the resin are fully oriented and crystallized, which greatly improves the comprehensive mechanical properties of the stretched laminated film, and the bonding strength between the layers is also greatly improved, taking into account the improvement of both the optical and mechanical properties of the laminated film.

### BRIEF DESCRIPTION OF THE DRAWINGS

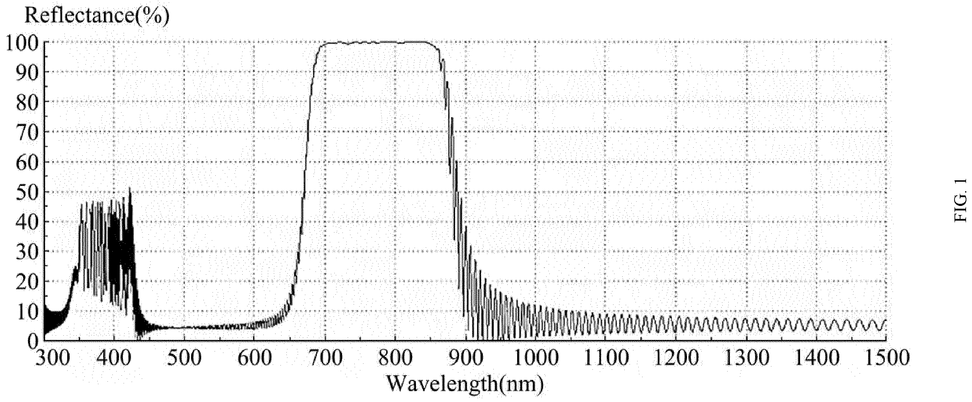

FIG. 1 is a reflection spectrum diagram of Example 2 in the visible light and near-infrared light bands.

### DESCRIPTION OF THE EMBODIMENTS

Unless otherwise specified, the sources of raw materials for each preparation example and embodiment in the present application are as follows:
PEF: refractive index 1.63, intrinsic viscosity 0.85dL/g, customized by Zhejiang Wankai New Materials Co., Ltd.
PMMA: Brand HBS006H, from Mitsubishi;
PET: Brand FG612, from Yizheng Chemical Fiber;
PEN: Brand 8050SC, from Teijin of Japan;
PHA: Brand BP330-05, derived from Bluepha;
PETG: Brand S2008, from SK, South Korea.

### Example 1

A bio-based laminated film is prepared according to the following steps:
Material selection: PEF resin particles with a refractive index of 1.63 and PMMA resin particles with a refractive index of 1.49 were selected as the primary raw materials of the laminated film; the intrinsic viscosity of the PEF resin particles was 0.85 dL/g, and the intrinsic viscosity of the PMMA resin particles was 0.9 dL/g;
Pretreatment: PEF resin particles and PMMA resin particles were vacuum dried and pre-crystallized in different vacuum drying ovens at a ratio of 56:44; the vacuum pre-crystallization temperature of PEF resin particles was 120°C, the vacuum degree was 0.5 Torr, and the vacuum time was 12h; the vacuum pre-crystallization temperature of PMMA resin particles was 140°C, the vacuum degree was 0.5 Torr, and the vacuum time was 12h;
Co-extrusion film forming: The pre-crystallized particles were pumped to the extruder's feed hopper through a heat insulated pipe. The pellets were co-extruded using different twin-screw extruders, and were transferred to a designed multi-layer feed block after passing through a melt metering pump and a filter, wherein PET and PMMA resins in a molten state in the feed block were alternately laminated in sequence; and the alternately laminated melts in the feed block were cut and stacked again by a multiplier behind the feed block, so as to multiply the original number of layers to form cast sheets with an optical thickness of 231 layers, and a total thickness of 26 µm;
The laminated melts subsequently entered the wedge-shaped die for confluence, and were extruded from the die lip after being laterally stretched in the die. The molten resin temperature in the melt pipe was set at 255°C, the molten resin temperature in the metering pump was set at 255°C, the molten resin temperature before the filter was set at 255°C; the molten resin temperature after the filter was set at 260°C, the molten resin temperature in the distributor was set at 260°C, and the molten resin temperature at the die was set at 260°C;
The sheet material extruded from the extruder die was cooled and stretched using a draw roller and a cooling roller. By means of the electrostatic effect of the electrostatic wire at the die, the sheet material extruded from the die achieved full intimate contact with the surface of the cooling roller. By adjusting the rotation speed of the cooling and stretching roller, a film of the required thickness was formed.

Stretching and setting: the cooled film was cut into squares of 110 mm ×110 mm and subjected to biaxial stretching and setting by a stretching machine. When the stretching ratio is 4.5, the specific stretching parameters were: stretching temperature 95°C, stretching rate 30 mm/s, chamber temperature of the heating box 105°C, blowing speed of the heating box 60 mm/s, and holding time 70s, to obtain a bio-based laminated film.

### Example 2

A bio-based laminated film, which differs from Example 1 in that the number of laminated layers in the co-extrusion film-forming step was 401 layers and the thickness of the film layer was 38 µm.

### Example 3

A bio-based laminated film, which differs from Example 1 in that the stretching ratio, stretching temperature and setting parameters in the stretching setting step were different, specifically:

The cooled film was cut into squares of 110 mm ×110 mm and biaxially stretched by a stretching machine. When the stretching ratio was 5, the specific stretching parameters were: stretching temperature 105°C, stretching rate 50 mm/s, chamber temperature of the heating box 115°C, blast speed of the heating box 80 mm/s, and holding time 90s.

### Example 4

A bio-based laminated film, which differs from Example 1 in that in this example, PEF resin particles with a refractive index of 1.63 and PETG resin particles with a refractive index of 1.57 were selected as primary raw materials for the laminated film; the intrinsic viscosity of the PEF resin particles is 0.85 dL/g, and the intrinsic viscosity of the PETG resin particles is 0.85 dL/g.

### Example 5

A bio-based laminated film, which differs from Example 1 in that in this example, PHA resin particles with a refractive index of 1.49 and PETG resin particles with a refractive index of 1.57 were selected as primary raw materials for the laminated film; the intrinsic viscosity of the PHA resin particles is 1 dL/g, and the intrinsic viscosity of the PETG resin particles is 0.85 dL/g.

### Comparative Example 1

A bio-based laminated film, which differs from Example 1 in that the process parameters of the co-extrusion film-forming step were different, specifically:
Co-extrusion film forming: The pre-crystallized particles were pumped to the extruder's feed hopper through a heat insulated pipe. The pellets were co-extruded using different twin-screw extruders, and were transferred to a designed multi-layer feed block after passing through a melt metering pump and a filter, wherein PET and PMMA resins in a molten state in the feed block were alternately laminated in sequence; and the alternately laminated melts in the feed block were cut and stacked again by a multiplier behind the feed block, so as to multiply the original number of layers to form cast sheets with an optical thickness of 231 layers, and a total thickness of 26 µm;
The laminated melts subsequently entered the wedge-shaped die for confluence, and were extruded from the die lip after being laterally stretched in the die. The molten resin temperature in the melt pipe was set at 230°C, the molten resin temperature in the metering pump was set at 230°C, the molten resin temperature before the filter was set at 230°C; the molten resin temperature after the filter was set at 240°C, the molten resin temperature in the distributor was set at 240°C, and the molten resin temperature at the die was set at 240°C;
The sheet material extruded from the extruder die was cooled and stretched using a draw roller and a cooling roller. By means of the electrostatic effect of the electrostatic wire at the die, the sheet material extruded from the die achieved full intimate contact with the surface of the cooling roller. By adjusting the rotation speed of the cooling and stretching roller, a film of the required thickness was formed.

### Comparative Example 2

A bio-based laminated film, which differs from Example 1 in that the process parameters of the stretching and setting step were different, specifically:
Stretching and setting: the cooled film was cut into squares of 110 mm ×110 mm and subjected to biaxial stretching and setting by a stretching machine. When the stretching ratio is 4.5, the specific stretching parameters were: stretching temperature 85°C, stretching rate 30 mm/s, chamber temperature of the heating box 95°C, blowing speed of the heating box 60 mm/s, and holding time 60s, to obtain a bio-based laminated film.

### Comparative Example 3

A laminated film, which differs from Example 1 in that PEF resin particles with a refractive index of 1.63 and PET resin particles with a refractive index of 1.65 were selected as primary raw materials of the laminated film.

### Comparative Example 4

A laminated film, which differs from Example 1 in that PET resin particles with a refractive index of 1.65 and PMMA resin particles with a refractive index of 1.49 were selected as primary raw materials of the laminated film.

### Test data

The optical properties and mechanical properties of Examples 1-5 and Comparative Examples 1-4 were tested below, and the test results are as follows:

**Table 1. Test Data of Examples 1-5**

| Comparative parameters | Example 1 | Examples 2 | Example 3 | Example 4 | Example 5 |
|---|---|---|---|---|---|
| Number of laminated layers | 231 | 401 | 231 | 231 | 231 |
| Layer thickness (µm) | 26 | 38 | 21 | 24 | 26 |
| Haze | 1.29 | 1.48 | 1.04 | 1.34 | 1.34 |
| Visible light transmittance (%) | 86.73 | 83.05 | 89.45 | 82.38 | 90.26 |
| Visible light reflectance (%) | 18.78 | 15.35 | 16.07 | 10.32 | 7.43 |
| Infrared reflectance (%) | 58.10 | 62.13 | 60.15 | 42.56 | 37.54 |
| Stretching ratio | 4.5 | 4.5 | 5 | 4.5 | 4.5 |
| Tensile strength (Mpa) | 163 | 198 | 150 | 156 | 157 |
| Elongation at break (%) | 96 | 108 | 89 | 92 | 91 |
| Shore hardness (Type D) | 78 | 94 | 64 | 80 | 74 |

**Table 2. Test Data of Comparative Examples 1-4**

| Comparative parameters | Example 1 | Comparative Example 1 | Comparative Example2 | Comparative Example3 | Comparative Example4 |
|---|---|---|---|---|---|
| Number of laminated layers | 231 | 231 | 231 | 231 | 231 |
| Layer thickness (µm) | 26 | 24 | 33 | 28 | 27 |
| Haze | 1.29 | 1.78 | 1.23 | 2.78 | 1.01 |
| Visible light transmittance (%) | 86.73 | 72.36 | 88.67 | 67.59 | 90.73 |
| Visible light reflectance (%) | 18.78 | 14.26 | 19.76 | 5.35 | 18.55 |
| Infrared reflectance (%) | 58.10 | 52.38 | 52.13 | 23.36 | 53.66 |
| Stretching ratio | 4.5 | 4.5 | 4.5 | 4.5 | 4.5 |
| Tensile strength (Mpa) | 163 | 187 | 145 | 115 | 128 |
| Elongation at break (%) | 96 | 103 | 88 | 55 | 72 |
| Shore hardness (Type D) | 78 | 82 | 61 | 76 | 48 |

Note: The haze was measured by a HAM-200 haze meter (Yuanfang, China); the visible light transmittance, visible light reflectance and infrared reflectance were measured by a 3600 Shimadzu spectrometer; FIG. 1 was obtained using the Essential Macleod software.

Comparative Example 1 forms a direct comparison with Example 1, and differs from Example 1 in that the extrusion temperature in the co-extrusion film-forming step is relatively low. The haze of Comparative Example 1 is high, and the visible light transmittance and infrared reflectance are low, and the optical performance is poor. The reason is that: the co-extrusion temperature is low, the pellets are not completely crystallized, more bubbles are formed between the laminated films, and the film surface of the laminated film is foggy, resulting in a decrease in the optical performance of the laminated film.

Comparative Example 2 forms a direct comparison with Example 1, and differs from Example 1 in that the stretching and setting temperature in the stretching and setting step is relatively low, the crystal orientation of the macromolecules in the film is incomplete, resulting in a significant decrease in the mechanical properties of the laminated film, and the infrared reflectance is also relatively low.

Comparative Example 3 forms a direct comparison with Example 1, and differs from Example 1 in that two resins having a refractive index difference of less than 0.05 are used for lamination. After actual testing, the visible light reflectance of the laminated film is small, the infrared reflectance is low, and the haze is large, which does not meet the needs of optical application scenarios such as thermal insulation.

Comparative Example 4 forms a direct comparison with Example 1, and differs from Example 1 in that traditional PET and PMMA are used for lamination. The PET and PMMA used in Comparative Example 4 are traditional polyester materials and do not have biodegradability. At the same time, the mechanical properties are poor, and the tensile strength and elongation at break are low; in terms of optical properties, the infrared reflectance is relatively low, and needs to be further improved in optical application scenarios such as thermal insulation.

Example 2 forms a direct comparison with Example 1, increasing the number of layers of the laminated film helps to improve the infrared reflectance, the thermal insulation performance of the laminated film, and the mechanical properties of the laminated film, however, the haze of the laminated film also increases significantly, the visible light transmittance decreases, the film surface of the laminated film is foggy, and the thermal insulation and high-definition optical requirements cannot be taken into account at the same time. At the same time, FIG. 1 is a reflection spectrum diagram of Example 2 in the visible light and near-infrared light bands. The vertical axis of FIG. 1 is reflectance. The minimum reflectance is obtained at 350-450nm, and the minimum reflectance is 45%. The maximum reflectance is obtained at 650-900nm, and the maximum reflectance reaches 100%. The difference between the maximum reflectance and the minimum reflectance is greater than 50%.

Example 3 forms a direct comparison between Example 1, by increasing the stretching ratio, stretching temperature and setting temperature of the laminated film, the growth of the crystal nucleus in the film is accelerated, the density between the layers of the laminated film is improved, the haze of the laminated film is reduced, the visible light transmittance and infrared reflectance are increased, and the optical performance of the laminated film is improved. However, due to the rapid formation of crystal nucleus, the crystallinity will decrease, resulting in poor mechanical properties of the laminated film.

Example 4 forms a direct comparison with Example 1. In Example 4, PETG with a refractive index of 1.57 is used instead of PMMA with a refractive index of 1.49. Although the intrinsic viscosity of the two is the same, the difference in refractive index is small, resulting in increased haze in the laminated film of Example 4, reduced infrared reflectance, and decreased optical performance.

Example 5 forms a direct comparison with Example 1, a combination of PETG and PHA resins is selected to replace a combination of PEF and PMMA resins. In Example 5, the refractive index difference is smaller, and the intrinsic viscosity difference is larger, resulting in increased haze, reduced infrared reflectance, and decreased optical performance in Example 5.

In summary, the present application provides a bio-based laminated film, which is biodegradable in property, has a haze lower than 1.5, an infrared reflectance higher than 35%, a tensile strength greater than 150 MPa, an elongation at break greater than 90%, and meets the needs of optical application scenarios and mechanical properties.

All technical features of the above-described embodiments may be arbitrarily combined. For conciseness of description, not all possible combinations of the technical features in the above-described embodiments have been explicitly enumerated. Nevertheless, any combination of these technical features shall be deemed as falling within the scope of this specification, provided that no contradiction arises from such combination.

The embodiments described above merely represent several implementations of the present invention, and while the description thereof is relatively specific and detailed, it shall not be construed as limiting the scope of the patent. It should be noted that those of ordinary skill in the art may make numerous modifications and improvements without departing from the inventive concept of the present application, all of which shall fall within the protection scope of the present application defined by the appended claims.

## Claims

1. A bio-based laminated film, obtained by alternately laminating two resins with different refractive indices, one of which is a bio-based polyester resin, the difference in refractive index between the two resins is larger than or equal to 0.05, and the laminated film reflects light with a wavelength ranging from 300 nm to 1200 nm; and
the bio-based polyester resin is polyethylene 2,5-furandicarboxylate or polyhydroxyalkanoate.

2. The bio-based laminated film according to claim 1, wherein one resin in the laminated film is polyethylene 2,5-furandicarboxylate, and the other resin is selected from the group consisting of polymethyl methacrylate, polyethylene naphthalate, polyethylene terephthalate-1,4-cyclohexane dimethanol or polyhydroxyalkanoate.

3. The bio-based laminated film according to claim 1, the intrinsic viscosities of the resins are 0.8-1.0 dL/g.

4. The bio-based laminated film according to claim 1, wherein the number of alternating layers of the bio-based laminated film is 231 to 401.

5. A method for preparing the bio-based laminated film according to any one of claims 1 to 4, comprising the steps of:
pretreatment: vacuum drying and pre-crystallizing two types of resin particles;
co-extrusion film forming: melting the pre-crystallized resin particles separately, introducing the molten resins into a distributor, and co-extruding the molten resins at a temperature ranging from 255°C to 265°C to obtain a cast sheet; and
stretching and setting: stretching the cast sheet at a stretching temperature of 95 to 105°C, setting the stretched sheet in a heating box maintained at 105°C to 115°C, to obtain a bio-based laminated film.

6. The method for preparing the bio-based laminated film according to claim 5, in the pretreatment step, the pre-crystallization temperature is 120-140°C, the pre-crystallization vacuum degree is 0.1-1 Torr, and the pre-crystallization time is 10-24h.

7. The method for preparing the bio-based laminated film according to claim 5, wherein, in the stretching and setting step, the stretching ratio is 3 to 5, and the stretching speed is 30 to 50 mm/s.

8. The method for preparing the bio-based laminated film according to claim 5, wherein, in the stretching and setting step, the blowing speed of the heating box is 60 to 80 mm/s.

9. The method for preparing the bio-based laminated film according to claim 5, wherein, in the stretching and setting step, the holding time of the heating box is 70 to 90s.
